# EUROPEAN PATENT SPECIFICATION

(11) **EP 2 898 187 B1**
(45) Date of publication and mention of the grant of the patent: **18.07.2018**
(21) Application number: 13762925.9
(22) Date of filing: 27.08.2013
(51) Int. Cl.: F01D 17/14, F01D 25/12, F01D 11/24, F01D 17/24, F01D 17/26

(54) **INTEGRATED ACTUATOR, GAS TURBINE ENGINE AND CORESPONDING OPERATING METHOD**
INTEGRIERTER AKTUATOR, GASTURBINENMOTOR UND ZUGEHÖRIGES BETRIEBSVERFAHREN
ACTIONNEUR INTÉGRÉ, MOTEUR À TURBINE À GAZ ET PROCÉDÉ DE FONCTIONNEMENT CORRESPONDANT

(30) Priority: 20.09.2012 US 201213623705
(43) Date of publication of application: 29.07.2015
(73) Proprietor: General Electric Company, Schenectady, NY 12345 (US)
(72) Inventor: WALKER-SANTIAGO, Gabriel, Cincinnati, OH 45215 (US); ISMAIL, Mustapha, Cincinnati, OH 45215 (US); LAUBENTHAL, Jeffrey, Scott, Cincinnati, OH 45215 (US); GLESSNER, John, Carl, Cincinnati, OH 45215 (US); BRADLEY, James, Darrell, Cincinnati, OH 45215 (US); MORRIS, David, William, Cincinnati, OH 45014 (US)
(74) Representative: Williams, Andrew Richard
(86) International application number: PCT/US2013/056707
(87) International publication number: WO 2014/046849

(56) References cited:
- EP-A2- 0 330 492
- US-A- 3 542 332
- US-A- 4 441 314
- US-A- 5 848 779
- US-B1- 7 874 310

## Description

### BACKGROUND

The embodiments described herein relate generally to cooling systems, and more specifically, to an integrated actuator valve for combining cooling systems of an apparatus, for example, a gas turbine engine.

From document EP0330492 a gas turbine engine is known comprising a turbine coupled to a turbine cooling system; an integrated actuator coupled to the turbine cooling system, the integrated actuator comprising: an actuator body; an extension rod coupled to the actuator body, the extension rod including a poppet valve, wherein the extension rod is configured for selective movement between a first position in a first mode of operation where the poppet valve is fully open; a second position in a second mode of operation where the poppet valve is less than fully open; a flow body coupled to the actuator body, the flow body housing the poppet valve; and a modulation device coupled to the tension rod, the modulation device configured to be fully open in the first mode of operation and configured to be less than fully open in the second mode of operation.

A gas turbine engine, such as an aircraft turbine engine, may in principle include an engine core with an axial-flow compressor, fuel injectors, combustors, an axial-flow turbine, and a rearward facing combustion-gas outlet. There may be many stages of compressors and many stages of turbines. When the turbine engine is in operation, air is drawn into the engine and compressed by the compressor, and fuel is added to the compressed air by the fuel injectors. The mixture of fuel and compressed air is ignited in the combustors. The resulting hot gas combustion flows through the turbine, whose turning drives the compressor, and out of the rear of the engine through the combustion-gas outlet. More complex versions of the gas turbine engine use a large-diameter turbofan driven by the engine core to increase the mass flow of air through a fan duct.

Cooling air may be required at various compartments and locations of the engine core, such as the turbine and the core engine compartment, during certain engine power settings. A modulated turbine cooling (MTC) system cools the turbine using an actuator to open and close valves that allow cooling air into the turbine as is necessary. A core compartment cooling (CCC) system cools the core undercowl engine compartment using an additional actuator and valve to distribute the cooling air. The MTC and CCC systems each have their own actuators and associated components that add to the weight, complexity, and cost of gas turbine engines.

Accordingly, there is a need for a simplified integrated actuator that reduces the weight, lowers the cost, and simplifies the complexity of gas turbine engines.

### BRIEF DESCRIPTION

In one aspect, an integrated actuator is provided. The integrated actuator comprises an actuator body, an extension rod coupled to the actuator body. The extension rod includes a piston valve and is configured for selective movement between a first position in a first mode of operation where the piston valve is fully open and a second position in a second mode of operation where the piston valve is less than fully open. The integrated actuator further comprises a flow body coupled to the actuator body such that the flow body houses the piston valve and a modulation device coupled to the extension rod. The modulation device is configured to be fully open in the first mode of operation and is configured to be less than fully open in the second mode of operation.

According to the invention, as defined by claim 1, a gas turbine engine is provided. The gas turbine engine comprises a turbine and a core compartment. The turbine is coupled to a modulated turbine cooling system for channeling cooling air into the turbine, the modulated turbine cooling system comprising a modulation device, while the core compartment is coupled to a core compartment cooling system. The gas turbine engine further comprises an integrated actuator coupled to the turbine cooling system and to the core compartment cooling system. The integrated actuator comprises an actuator body, an extension rod coupled to the actuator body. The extension rod includes a piston valve and is configured for selective movement between a first position in a first mode of operation where the piston valve is fully open and a second position in a second mode of operation where the piston valve is less than fully open. The integrated actuator further comprises a flow body coupled to the actuator body such that the flow body houses the piston valve and the modulation device coupled to the extension rod. The modulation device is configured to be fully open in the first mode of operation and is configured to be less than fully open in the second mode of operation.

In yet another aspect, a not claimed method for operating an integrated actuator is provided. The method comprises providing an integrated actuator including an actuator body and an extension rod coupled to the actuator body. The extension rod includes a piston valve. The integrated actuator further includes a flow body that is coupled to the extension rod, where the flow body houses the piston valve. The integrated actuator also includes a modulation device coupled to the extension rod. The method of operation includes extending the extension rod into a first position in a first mode of operation. In the first position, the piston valve and the modulation device are fully open. When the extension rod is retracted into a second position in a second mode of operation, the piston valve and the modulation device are less than fully open.

### BRIEF DESCRIPTION OF THE DRAWINGS

FIG. 1 is a partially sectioned schematic side view of a gas turbine engine illustrating the exemplary integrated actuator.
FIG. 2 is a schematic side view of an exemplary integrated actuator during a first mode of operation.
FIG. 3 is a schematic side view of an exemplary integrated actuator during a second mode of operation.
FIG. 4 is a cross-sectional view of an integrated actuator taken along line A-A in Figs. 2 and 3.
FIG. 5 is a schematic side view of an alternative integrated actuator during a first mode of operation.
FIG. 6 is a schematic side view of an alternative integrated actuator during a second mode of operation.
FIG. 7 is a cross-sectional view of an integrated actuator taken along line B-B in Figs. 5 and 6.

### DETAILED DESCRIPTION

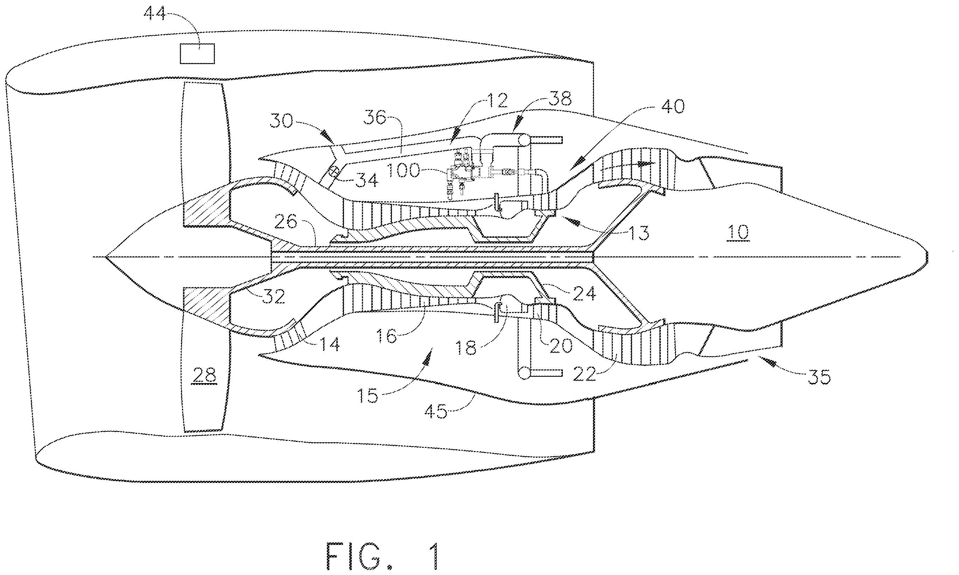

FIG. 1 is a partially sectioned schematic side view of a gas turbine engine 10 illustrating an exemplary integrated actuator 100. Engine 10 includes a core compartment cooling (CCC) system 12 and a modulated turbine cooling (MTC) system 13, according to the present disclosure. The exemplary gas turbine engine 10 also includes, in serial flow relationship from forward to aft, a fan 28, a booster or low pressure compressor 14, a high pressure compressor 16, a combustor 18, a high pressure turbine 20 and a low pressure turbine 22, all of which, excluding fan 28, reside within a core compartment 15 of gas turbine engine 10. Both high pressure turbine 20 and low pressure turbine 22 include a plurality of stages (not shown) that each include a rotor disk (not shown) and a plurality of circumferentially spaced rotor blades (not shown) extending radially outward from the rotor disk. High pressure turbine 20 is drivingly connected to high pressure compressor 16 with a first rotor shaft 24 and low pressure turbine 22 is drivingly connected to low pressure compressor 14 with a second rotor shaft 26 coaxially disposed within shaft 24 about a longitudinal centerline axis of engine 10. Engine 10 is used to drive fan 28 through shaft extension 32.

Core compartment 15 is heated by radiation and combustion from combustor 18 and turbines 20 and 22, which all operate at very high temperatures. CCC system 12 is utilized to cool core compartment 15 to prevent engine 10 from overheating. CCC system 12 includes a fan discharge inlet 30, a variable bypass valve 34, an air duct 36, integrated actuator 100, and a cooling manifold 38. Integrated actuator 100 is mounted to an exterior surface 45 of core compartment 15. CCC system 12 receives air from at least fan discharge inlet 30 through air duct 36 into integrated actuator 100. CCC system 12 may receive air from other sources, such as bypass valve 34. During the first mode of operation 102, integrated actuator 100 is fully open to distribute air to cooling manifold 38 to cool the core components of gas turbine engine 10. The air from manifold 38 is typically discharged over core compartment 15 and exits through an aft vent 35. In a second mode of operation 104, integrated actuator is less than fully open and distributes less cooling air to CCC system 12 The modes of operation 102 and 104 and operation of integrated actuator 100 are described in further detail below.

MTC system 13 includes ducting (not shown) between compressor 14 and turbine 20 and further ducting (not shown) circumferentially about turbine 20. MTC system 13 also includes integrated actuator 100 coupled to a modulation device, such as an actuated valve 40, located radially outward from turbine 20. During engine 10 operation, turbine 20, including the associated rotor disks and rotor blades, operate at very high temperatures and require direct cooling. MTC system 13 is one system that acts to channel cooling air into turbine 20, including the rotor disks and rotor blades, using integrated actuator 100 to modulate actuated valve 40 to control the flow of cooling air into turbine 20 as is necessary. Specifically, during the first mode of operation 102, integrated actuator 100 is configured to fully open valve 40 to allow for a greater mass flow of cooling air into turbine 20 than during the second mode of operation 104 when integrated actuator 100 at least partially closes valve 40 to limit the amount of cooling air channeled to turbine 20 when cooling air from MTC system 13 is not required. The modes of operation 102 and 104 and operation of integrated actuator 100 are described in further detail below.

In the exemplary embodiment, gas turbine engine 10 operates under various modes of operation. For example, engine 10 can operate under first and second modes of operation 102 and 104 which correspond with relatively high and low power settings such as takeoff and cruise, respectively. During takeoff and taxiing, the first mode of operation 102, engine 10 is effective for generating relatively large thrust power output at a high power setting as compared to a relatively small amount of thrust power output at a low power setting generated during cruise operation, the second mode of operation 104.

Inasmuch as the temperature of combustion gases is significantly higher during takeoff than during cruise, cooling air is typically provided to the undercowl core compartment 15 by CCC system 12 and to turbine 20 and its associated components by MTC system 13 during the first mode of operation 102 for reducing the temperatures generated within combustors 18 and turbine 20. During the first mode of operation 102, integrated actuator 100 is configured to be fully open to channel cooling air to core compartment 15 through CCC system 12 and to fully open valve 40 to allow MTC system 13 to cool turbine 20.

However, in cases where engine 10 produces less thrust power and the temperature of combustion gases is lower, as in the second mode of operation 104 during cruise flight, core compartment 15 and turbine 20 do not require as much cooling air as during the first mode of operation 102. During the second mode of operation 104, integrated actuator 100 is configured to be less than fully open to allow at least a limited amount of cooling air to CCC system 12 and to at least partially close valve 40 such that MTC system 13 provides less cooling air to turbine 20 during the second mode of operation 104.

Operation of integrated actuator 100 is controlled by an electrical output signal generated by an electric control unit (ECU) 44 according to a predetermined control schedule that defines the first and second modes of operation 102 and 104 based on the power setting of gas turbine engine 10. ECU 44 controls the operation of integrated actuator 100 so as to allow for CCC system 12 to channel cooling air to core compartment 15 and MTC system 13 to fully open valve 40 to channel cooling air to turbine 20 during the first mode of operation 102, such as during taxiing and takeoff. ECU 44 further controls the operation of integrated actuator 100 so as to limit the amount of cooling air channeled to core compartment 15 by CCC system 12 and at least partially close valve 40 to limit the amount of cooling air channeled to turbine 20 by MTC system 13 during the second mode of operation 104, such as during cruise flight. CCC system 12 and MTC system 13 operate under the same schedule such that when either core compartment 15 or turbine 20 require cooling, as determined by ECU 44 according to the control schedule, integrated actuator 100 is engaged to allow cooling air to both core compartment 15 and turbine 20.

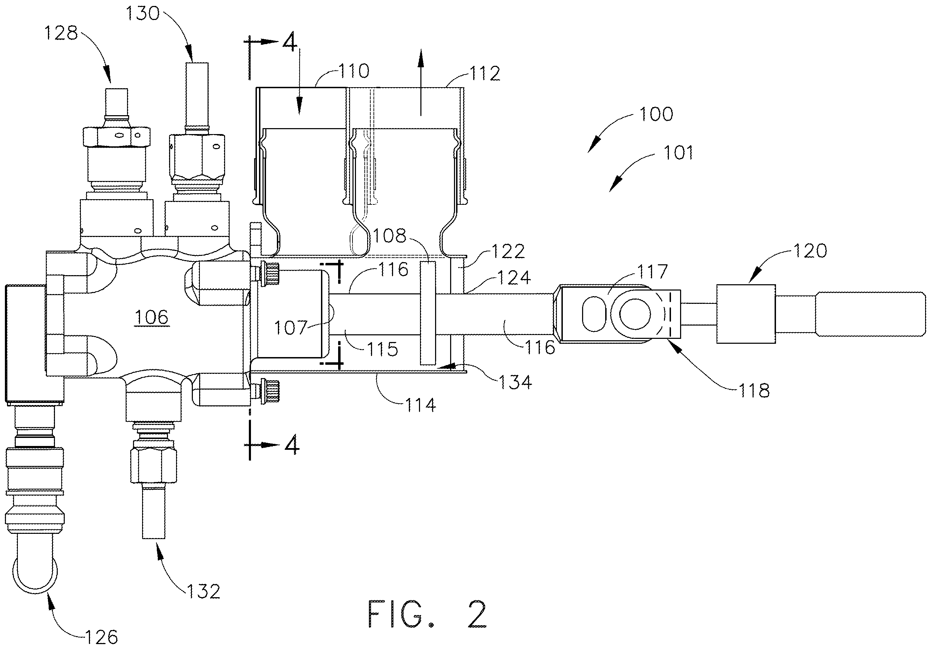

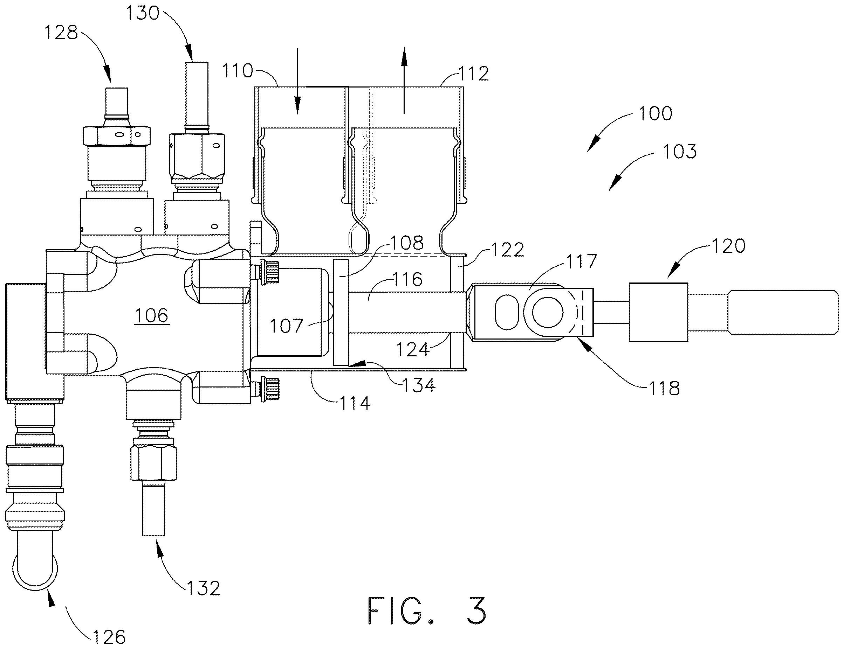

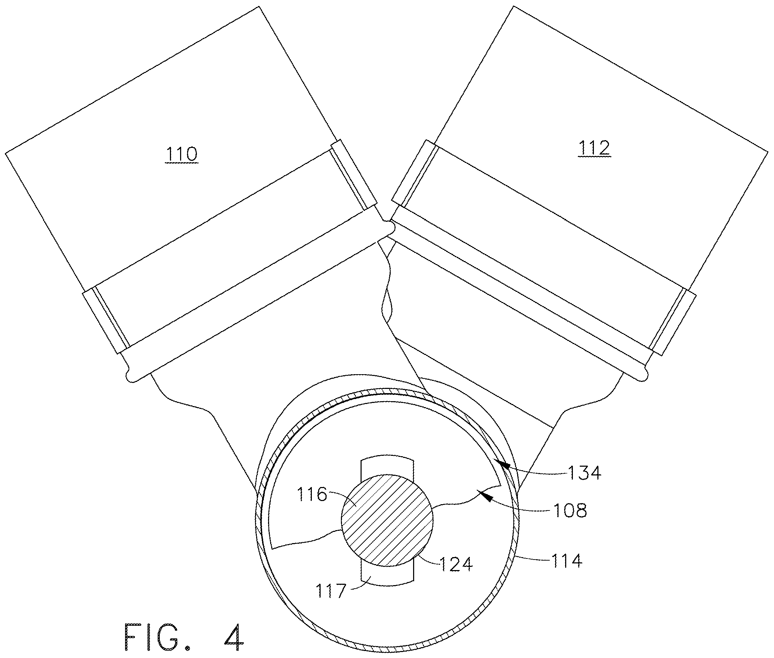

FIG. 2 is a schematic side view of an exemplary integrated actuator 100 during the first mode of operation 102. FIG. 3 is a schematic side view of an exemplary integrated actuator 100 during a second mode of operation 104. FIG. 4 is a cross-sectional view of an integrated actuator taken along line A-A in Figs. 2 and 3. In the exemplary embodiment, integrated actuator 100 is cylindrical in shape and includes an actuator body 106 and a flow body 114 extending in the aft direction from actuator body 106. Coupled to actuator body 106 and extending in a radial direction are an electrical connection 126, a hydraulic head 128, a hydraulic rod 130, and a hydraulic drain 132. Electrical connection 126 is coupled to ECU 44 (shown in FIG. 1) and configured to receive a signal from ECU 44. Hydraulic head 128, hydraulic rod 130, and hydraulic drain 132 are coupled to hydraulic lines (not shown) that channel hydraulic fluid into actuator body 106 of integrated actuator 100.

An airflow inlet 110 and an airflow outlet 112 extend radially from flow body 114 and are spaced apart by a distance along flow body 114. Airflow inlet 110 is coupled to air duct 36 (shown in FIG. 1) and is configured to channel cooling air between air duct 36 of CCC system 12 (shown in FIG. 1) and flow body 114. Airflow outlet 112 is coupled to manifold 38 of CCC system 12 (shown in FIG. 1) and is configured to channel cooling air between flow body 114 and manifold 38. Flow body 114 includes, at an end opposite actuator body 106, an end wall 122 that includes a hole sized and shaped to receive a sliding bushing 124 at its center. An extension rod 116 is coupled at its first end 115 to an aft end 107 of actuator body 106 and extends within flow body 114 to pass through end wall 122. End wall includes a sliding bushing 124 to support extension rod 116. A push/pull cable 120 is coupled to a second end 117 of extension rod 116, opposite actuator body 106, by a mechanical link 118. In the exemplary embodiment, cable 120 is configured to manipulate a modulation device, such as valve 40 of MTC system 13 (shown in FIG. 1).

Integrated actuator 100 further includes a piston valve 108 coupled to extension rod 116 within flow body 114. In the exemplary embodiment, piston valve 108 is sized and shaped such that a circumferential gap 134 exists between piston valve 108 and flow body 114. That is, in the exemplary embodiment, the diameter of flow body 114 is greater than the diameter of piston valve 108 such that gap 134 is defined about piston valve 108. Piston valve 108 is configured to be selectively movable within flow body 114 according to the movement of extension rod 116 as commanded by ECU 44.

FIG. 2 illustrates integrated actuator 100 during the first mode of operation 102 where gas turbine engine 10 is operating at high temperatures, such as during taxiing and takeoff, and core compartment 15 (shown in FIG. 1) and turbine 20 (shown in FIG. 1) require cooling air to prevent failure. In the first mode of operation 102, ECU 44 sends an electronic signal according to a predetermined schedule to fully open integrated actuator 100 such that piston valve 108 moves into a first position 101. In first position 101, piston valve 108 is also fully open.

Cooling air is then able to flow into inlet 30 and/or through valve 34 and duct 36, and into flow body 114 of integrated actuator 100 via airflow inlet 110. The signal from ECU 44 causes actuator body 106 of integrated actuator 100 to move extension rod 116 in an aft direction towards end wall 122 such that piston valve 108 is in first position 101. Cooling air enters and exits integrated actuator 100 perpendicular to the direction of movement of actuator body 106. In first position 101, piston valve 108 allows flow communication between airflow inlet 110, flow body 114, and airflow outlet 112 such that cooling air is able to flow through CCC system 12, and more specifically through integrated actuator 100, and discharge cooling air into the undercowl of core compartment 15.

In the exemplary embodiment of integrated actuator 100 operation in first position 101, extension rod 116 is extending through end wall 122, and more specifically through sliding bushing 124, such that mechanical link 118 engages cable 120 to fully open valve 40 (shown in FIG. 1). When valve 40 is fully open, MTC system 13 channels cooling air into turbine 20 (shown in FIG. 1) to reduce its operating temperature. In the exemplary embodiment, mechanical link 118 is a clevis link, but it may be any mechanical link that enables integrated actuator 100 to function as described herein. Alternatively, there may be no mechanical link and extension rod 116 may extend a full distance to valve 40. Furthermore, valve 40 may be any device operable by an extension rod. That is, the actuation of extension rod 116 to place piston valve 108 in first position 101 not only allows the channeling of a fluid, cooling air in the exemplary embodiment, through integrated actuator 100, but also operates a device that may be coupled to second end 117 of extension rod 116.

During the first mode of operation 102, ECU 44 commands actuator body 106 of integrated actuator 100 to extend a distance in the axial direction such that piston valve 108 is moved into fully open first position 101 and cable 120, coupled to extension rod 116 via mechanical link 118, fully opens valve 40. The signal from ECU 44 causes these actions to occur simultaneously such that piston valve 108 and valve 40 are concurrently in first position 101 during the first mode of operation 102. That is, CCC system 12 and MTC system 13 are on common schedules such that both systems 12 and 13 are activated by ECU 44 even if ECU determines only one system 12 or 13 requires cooling air. More specifically, when turbine 20 is operating at a temperature that requires cooling air from MTC system 13 to prevent failure, but core compartment 15 may not require cooling air, ECU 44 commands integrated actuator 100 to activate to fully open valve 40 and allow MTC system 13 to cool turbine 20. Actuation of extension rod 116 to engage valve 40 moves piston valve 108 into first position 101 and allows CCC system 12 to channel cooling air to core compartment 15 despite it not being required at that time.

FIG. 3 illustrates integrated actuator 100 during the second mode of operation 104 where gas turbine engine 10 is operating at lower temperatures than during the first mode of operation 102, such as during cruise flight. In the second mode of operation, core compartment 15 (shown in FIG. 1) and turbine 20 (shown in FIG. 1) require less cooling air to prevent failure than is required in the first mode 102. In the second mode of operation 104, ECU 44 sends an electronic signal according to a predetermined schedule to control integrated actuator 100 such that piston valve 108 and valve 40 move into a less than fully open second position 103. Because neither core compartment 15 or turbine 20 require the same amount of cooling air during the second mode of operation 104 as during the first mode 102, integrated actuator 100 is configured to limit the amount to cooling air provided to both CCC system 12 and MTC system 13 during the second mode of operation 104.

In the exemplary embodiment of integrated actuator 100 operation in second position 103, piston valve 108 is less than fully open to channel a limited amount of cooling air through CCC system 12. The signal from ECU 44 causes actuator body 106 of integrated actuator 100 to move extension rod 116 in a forward direction, opposite the direction of movement in the first mode 102, towards actuator body 106 and away from end wall 122 such that piston valve 108 is less than fully open in second position 103. In second position 103, piston valve 108 is configured to at least partially prevent flow communication between airflow inlet 110, flow body 114, and airflow outlet 112 such that cooling air is at least partially blocked by piston valve 108 and less cooling air is channeled through CCC system 12, and more specifically through integrated actuator 100, than during the first mode of operation 102.

In the exemplary embodiment, cooling air that flows into integrated actuator 100 during the second mode of operation 104 is channeled around piston valve 108 through gap 134 and exits integrated actuator 100 via airflow outlet 112. In the exemplary embodiment, piston valve 108 and gap 134 are configured to limit the amount of cooling air flowing through integrated actuator 100, and therefore CCC system 12, during the second mode of operation 104 when piston valve is in the second position 103. Alternatively, piston valve 108 may be of the same diameter of flow body 114 such that no gap is defined therebetween, and piston valve 108 may be configured to act as a seal to prevent any cooling air from being channeled through CCC system 12, and more specifically through integrated actuator 100.

In the exemplary embodiment of integrated actuator 100 operation in second position 103, actuator body 106 pulls extension rod 116 in a forward direction toward actuator body 106 and away from end wall 122 such that mechanical link 118 pulls cable 120 to at least partially close valve 40 (shown in FIG. 1). Accordingly, when valve 40 is less then fully open, MTC system 13 channels a reduced amount of cooling air into turbine 20 (shown in FIG. 1) than during the first mode of operation 102 when valve 40 is fully open. In the exemplary embodiment, mechanical link 118 is a clevis link, but it may be any mechanical link that enables integrated actuator 100 to function as described herein. Alternatively, there may be no mechanical link and extension rod 116 may extend a full distance to valve 40. Furthermore, valve 40 may be any device operable by an extension rod. That is, the actuation of extension rod 116 to place piston valve 108 in first position 101 not only allows the channeling of a fluid, cooling air in the exemplary embodiment, through integrated actuator 100, but also operates any device that may be coupled to distal end 117 of extension rod 116.

During the second mode of operation 104, ECU 44 commands actuator body 106 of integrated actuator 100 to retract extension rod 116 a distance in the axial direction towards actuator body 106 such that piston valve 108 is moved into a less than fully open second position 103 to limit the amount of cooling provided to core compartment through CCC system 12. Furthermore, the retraction of extension rod 116 causes cable 120, coupled to extension rod 116 via mechanical link 118, to manipulate valve 40 such that the amount of cooling air provided to turbine 20 through MTC system 13 is reduced. The signal from ECU 44 causes these actions to occur simultaneously such that piston valve 108 and valve 40 are concurrently in second position 103 during the second mode of operation 104. That is, CCC system 12 and MTC system 13 are on common schedules such that both systems 12 and 13 provide a reduced amount of cooling air to core compartment 15 and turbine 20, respectively, during the second mode of operation 104 when ECU 44 determines that neither core compartment or turbine require as much cooling air to prevent failure as required in first mode 102. More specifically, when core compartment 15 and turbine 20 are operating at temperatures that require less cooling air from CCC system 12 and MTC system 13, respectively, to prevent failure, ECU 44 commands integrated actuator 100 to retract extension rod 116 to move piston valve 108 and valve 40 into a less than fully open second position 103 to limit cooling air flow through CCC system 12 and MTC system 13, respectively.

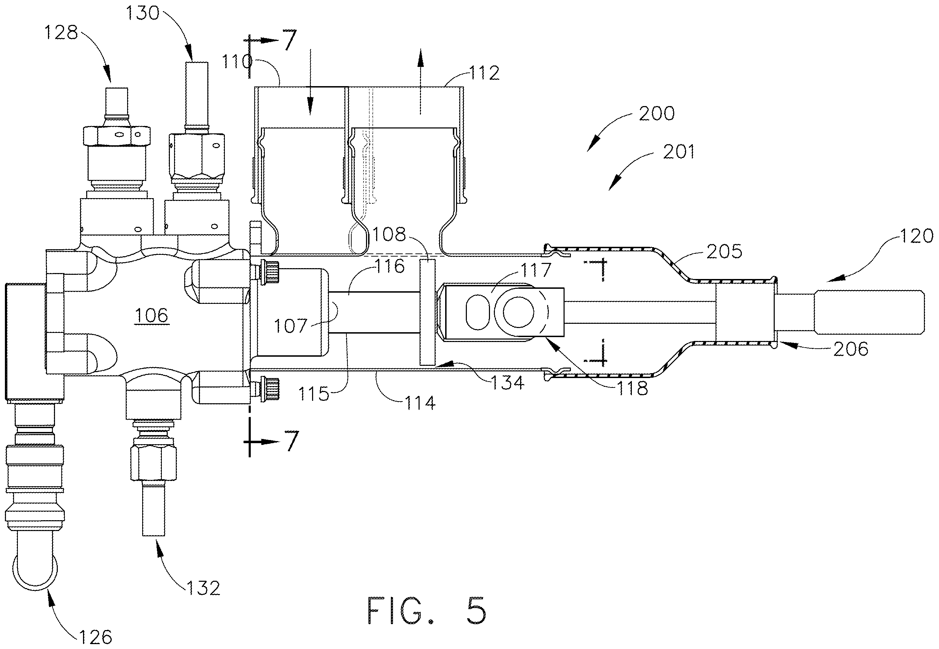

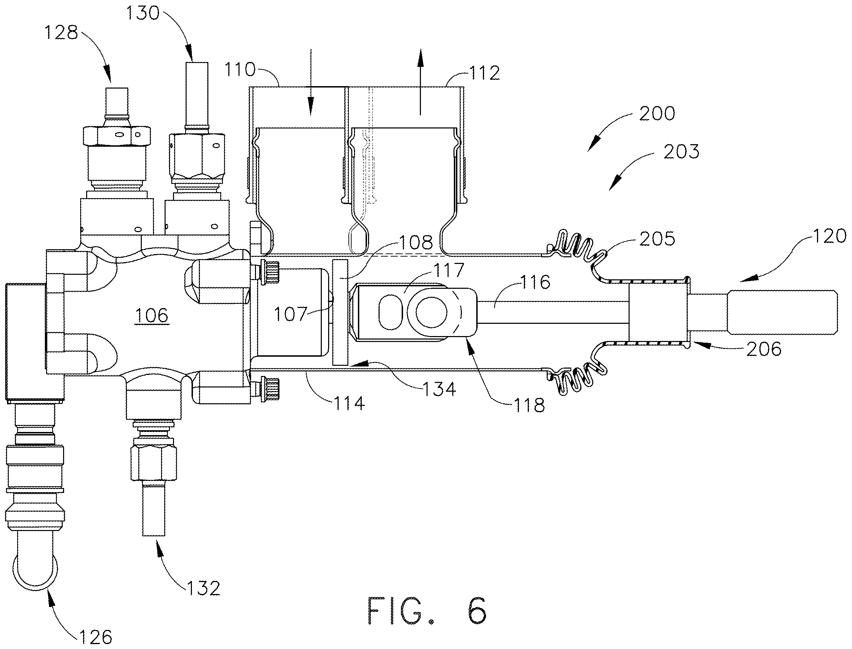

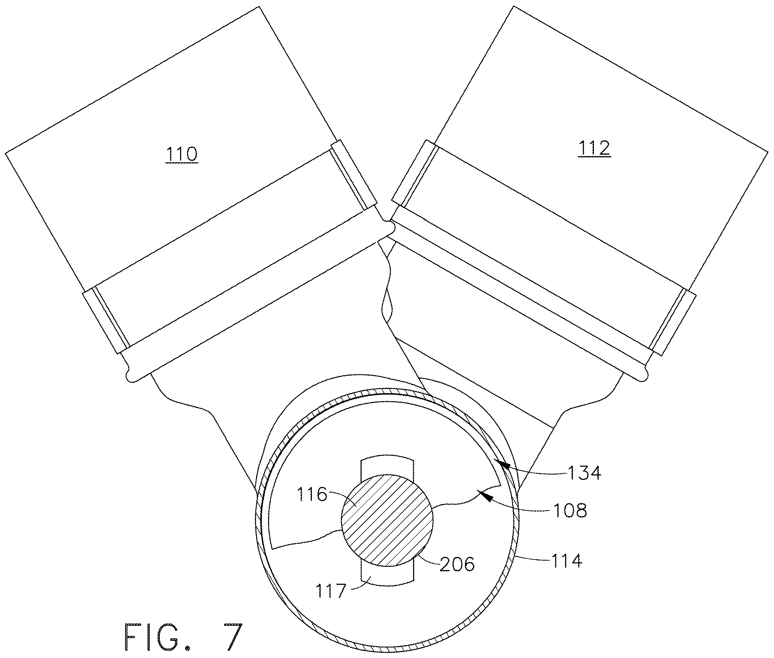

FIG. 5 is a schematic side view of an alternative integrated actuator 200 during the first mode of operation 102. FIG. 6 is a schematic side view of alternative integrated actuator 200 during the second mode of operation 104. FIG. 7 is a cross-sectional view of an integrated actuator taken along line B-B in Figs. 5 and 6. Components of integrated actuator 200 identical to those of integrated actuator 100 are similarly described and numbered herein. In the exemplary embodiment, integrated actuator 200 is cylindrical in shape and includes an actuator body 106 and a flow body 114 extending in the aft direction from actuator body 106. Coupled to actuator body 106 and extending in a radial direction are an electrical connection 126, a hydraulic head 128, a hydraulic rod 130, and a hydraulic drain 132. Electrical connection 126 is coupled to ECU 44 (shown in FIG. 1) and configured to receive a signal from ECU 44. Hydraulic head 128, hydraulic rod 130, and hydraulic drain 132 are coupled hydraulic lines (not shown) that channel hydraulic fluid into actuator body 106 of integrated actuator 200.

An airflow inlet 110 and an airflow outlet 112 extend radially from flow body 114 and are spaced apart by a distance along flow body 114. Airflow inlet 110 is coupled to air duct 36 (shown in FIG. 1) and is configured to channel cooling air between air duct 36 of CCC system 12 (shown in FIG. 1) and flow body 114. Airflow outlet 112 is coupled to manifold 38 of CCC system 12 (shown in FIG. 1) and is configured to channel cooling air between flow body 114 and manifold 38. Flow body 114 includes, at an end opposite actuator body 106, a flexible rubber bellows 205. An extension rod 116 is coupled at its first end 115 to an aft end 107 of actuator body 106, extends within flow body 114, and is coupled to push/pull cable 120 at extension rod second end 117 via mechanical link 118. Bellows 205 is configured to form a seal about extension rod 116 to prevent air leakage. Alternatively, bellows 205 may be configured to enshroud mechanical link 118 and at least a portion of cable 120 such that cable 120 passes through an opening 206 in bellows 205 and a seal is provided about cable 120 at opening 206 to prevent air leakage from integrated actuator 200. In the exemplary embodiment, cable 120 is configured to manipulate valve 40 of MTC system 13 (shown in FIG. 1). Bellows 205 may also contain any broken or liberated part from mechanical link 118. In the event of mechanical link 118 failure, bellows 205 prevents components of mechanical link 118 from falling into engine 10 and causing further damage.

Integrated actuator 200 further includes a piston valve 108 coupled to extension rod 116 within flow body 114. In the exemplary embodiment, piston valve 108 is sized and shaped such that a gap 134 exists between piston valve 108 and flow body 114. That is, in the exemplary embodiment, the diameter of flow body 114 is greater than the diameter of piston valve 108 such that gap 134 is defined about piston valve 108. Piston valve 108 is configured to be selectively movable between first position 101 and second position 103 within flow body 114 according to the movement of extension rod 116 as commanded by ECU 44.

FIG. 5 illustrates integrated actuator 200 during the first mode of operation 102 where gas turbine engine 10 is operating at high temperatures, such as during taxiing and takeoff, and core compartment 15 (shown in FIG. 1) and turbine 20 (shown in FIG. 1) require cooling air to prevent failure. In the first mode of operation 102, ECU 44 sends an electronic signal according to a predetermined schedule to engage integrated actuator 200 such that piston valve 108 moves into fully open first position 101.

Cooling air is then able to flow into inlet 30 and/or valve 34, through duct 36, and into flow body 114 of integrated actuator 200 via airflow inlet 110. The signal from ECU 44 causes actuator body 106 of integrated actuator 200 to move extension rod 116, and therefore piston valve 108, in an aft direction towards bellows 205 such that piston valve 108 is in fully open first position 101. Cooling air enters and exits integrated actuator 200 perpendicular to the direction of movement of actuator body 106. In first position 101, piston valve 108 is fully open to allow flow communication between airflow inlet 110, flow body 114, and airflow outlet 112 such that cooling air is able to flow through CCC system 12, and more specifically through integrated actuator 200, and discharge cooling air into the undercowl of core compartment 15.

In the exemplary embodiment of integrated actuator 200 operation in first position 101, extension rod 116 pushes cable 120 via mechanical link 118 such that bellows 205 expand in an axial direction, parallel to flow body 114, and cable 120 engages, and fully opens, valve 40 (shown in FIG. 1). When valve 40 is fully open, MTC system 13 channels cooling air into turbine 20 (shown in FIG. 1) to reduce its operating temperature. In the exemplary embodiment, mechanical link 118 is a clevis link, but it may be any mechanical link that enables integrated actuator 200 to function as described herein. Alternatively, there may be no mechanical link and extension rod 116 may extend a full distance through bellows 205 to valve 40. Furthermore, valve 40 may be any device operable by an extension rod. That is, the actuation of extension rod 116 to place piston valve 108 in first position 101 not only allows the channeling of a fluid, cooling air in the exemplary embodiment, through integrated actuator 100, but also operates any device that may be coupled to second end 117 of extension rod 116.

During the first mode of operation 102, ECU 44 commands actuator body 106 of integrated actuator 200 to extend a distance in the axial direction such that piston valve 108 is moved into fully open first position 101 and cable 120, coupled to extension rod 116 via mechanical link 118, fully opens valve 40. The signal from ECU 44 causes these actions to occur simultaneously such that piston valve 108 piston valve 108 and valve 40 are concurrently in first position 101 during the first mode of operation 102. That is, CCC system 12 and MTC system 13 are on common schedules such that both systems 12 and 13 are activated by ECU 44 even if ECU determines only one system 12 or 13 requires cooling air. More specifically, when turbine 20 is operating at a temperature that requires cooling air from MTC system 13 to prevent failure, but core compartment 15 may not require cooling air, ECU 44 commands integrated actuator 200 to activate to fully open valve 40 and allow MTC system 13 to cool turbine 20. Actuation of extension rod 116 to engage valve 40 move piston valve 108 into first position 101 and allows CCC system 12 to channel cooling air to core compartment 15 despite it not being required at that time.

FIG. 6 illustrates integrated actuator 200 during the second mode of operation 104 where gas turbine engine 10 is operating at lower temperatures than during the first mode of operation 102, such as during cruise flight. In the second mode of operation, core compartment 15 (shown in FIG. 1) and turbine 20 (shown in FIG. 1) require less cooling air to prevent failure than is required in the first mode 102. In the second mode of operation 104, ECU 44 sends an electronic signal according to a predetermined schedule to control integrated actuator 100 such that piston valve 108 and valve 40 move into a less than fully open second position 103. Because neither core compartment 15 or turbine 20 require the same amount of cooling air during the second mode of operation 104 as during the first mode 102, integrated actuator 200 is configured to limit the amount to cooling air provided to both CCC system 12 and MTC system 13 during the second mode of operation 104.

In the exemplary embodiment of integrated actuator 200 operation in second position 103, piston valve 108 is less than fully open to channel a limited amount of cooling air through CCC system 12. The signal from ECU 44 causes actuator body 106 of integrated actuator 200 to move extension rod 116 in a forward direction, opposite the direction of movement in the first mode 102, towards actuator body 106 such that piston valve 108 is less than fully open in second position 103. In second position 103, piston valve 108 is configured to at least partially prevent flow communication between airflow inlet 110, flow body 114, and airflow outlet 112 such that cooling air is at least partially blocked by piston valve 108 and less cooling air is channeled through CCC system 12, and more specifically through integrated actuator 200, than during the first mode of operation 102.

In the exemplary embodiment, cooling air that flows into integrated actuator 200 is channeled around piston valve 108 through gap 134 and exits integrated actuator 200 via airflow outlet 112. In the exemplary embodiment, piston valve 108 and gap 134 are configured to allow a reduced amount of cooling air to flow through integrated actuator 200, and therefore CCC system 12, during the second mode of operation 104 when piston valve 108 is in the second position 103 and bypass valve 34 is only partially open or leaks. Alternatively, piston valve 108 may be of the same diameter of flow body 114 such that no gap is defined therebetween, and piston valve 108 may be configured to act as a seal to prevent any cooling air from being channeled through CCC system 12, and more specifically through integrated actuator 200.

In the exemplary embodiment of integrated actuator 200 operation in second position 103, actuator body 106 pulls extension rod 116 in a forward direction toward actuator body 106 such that bellows 205 contract and mechanical link 118 pulls cable 120 to at least partially close valve 40 (shown in FIG. 1). Accordingly, when valve 40 is less then fully open, MTC system 13 channels a reduced amount of cooling air into turbine 20 (shown in FIG. 1) than during the first mode of operation 102 when valve 40 is fully open. In the exemplary embodiment, mechanical link 118 is a clevis link, but it may be any mechanical link that enables integrated actuator 200 to function as described herein. Alternatively, there may be no mechanical link and extension rod 116 may extend a full distance through bellows 205 to valve 40. Furthermore, valve 40 may be any device operable by an extension rod. That is, the actuation of extension rod 116 to place piston valve in first position 101 not only allows the channeling of a fluid, cooling air in the exemplary embodiment, through integrated actuator 200, but also operates any device that may be coupled to second end 117 of extension rod 116.

During the second mode of operation 104, ECU 44 commands actuator body 106 of integrated actuator 200 to retract extension rod 116 a distance in the axial direction towards actuator body 106 such that piston valve 108 is moved into a less than fully open second position 103 to limit the amount of cooling provided to core compartment through CCC system 12. Furthermore, the retraction of extension rod 116 causes bellows 205 to contract and cable 120, coupled to extension rod 116 via mechanical link 118, to manipulate valve 40 such that the amount of cooling air provided to turbine 20 through MTC system 13 is reduced. The signal from ECU 44 causes these actions to occur simultaneously such that piston valve 108 and valve 40 are concurrently in second position 103 during the second mode of operation 104. That is, CCC system 12 and MTC system 13 are on common schedules such that both systems 12 and 13 provide a reduced amount of cooling air to core compartment 15 and turbine 20, respectively, when ECU 44 determines that neither core compartment or turbine require as much cooling air to prevent failure as required in first mode 102. More specifically, when core compartment 15 and turbine 20 are operating at temperatures that require less cooling air from CCC system 12 and MTC system 13, respectively, to prevent failure, ECU 44 commands integrated actuator 100 to retract extension rod 116 to move piston valve 108 and valve 40 into a less than fully open second position 103 to limit cooling air flow through CCC system 12 and MTC system 13, respectively.

Embodiments of the integrated actuator descried herein provide for a single actuator and valve to control the flow of cooling air to two separate systems. In the first mode of operation, the actuator body extends the extension rod to place the piston valve in a fully open first position where it allows cooling air to flow through the integrated actuator such that the cooling air can be channeled to the core compartment and facilitate reducing the temperature of the core compartment. Also in the first mode of operation, the extension rod fully opens a modulating device, or valve, such that the valve allows cooling air to flow into the turbine to facilitate reducing the temperature of the turbine components. The integrated actuator is able to simultaneously carry out these tasks because both the piston valve and the modulating device are coupled to the actuated extension rod. In the second mode of operation, the actuator body retracts the extension rod to bring it into a less than fully open second position where the piston valve substantially blocks the flow of cooling air to limit the amount of cooling air being channeled through the integrated actuator. Also in the second mode of operation, the extension rod manipulates the modulating device such that the valve is less then fully open to limit the amount of cooling air supplied to the turbine. By controlling the flow of cooling air to two separate cooling systems using only a single actuator, the integrated actuator as described above reduces the weight, lowers the costs, and simplifies the design of modern gas turbine engines.

Exemplary embodiments of an integrated actuator for a gas turbine engine are described above in detail. The integrated actuator and cooling systems are not limited to the specific embodiments described herein, but rather, components of systems and/or steps of the methods may be utilized independently and separately from other components and/or steps described herein. For example, the methods may also be used in combination with other systems requiring a dual functioning integrated actuator, and are not limited to practice with only the cooling systems and methods as described herein. Rather, the exemplary embodiment can be implemented and utilized in connection with many other applications requiring a dual functioning integrated actuator.

Although specific features of various embodiments of the disclosure may be shown in some drawings and not in others, this is for convenience only.

This written description uses examples to disclose the best mode, and also to enable any person skilled in the art to practice the disclosure, including making and using any devices or systems and performing any incorporated methods. The patentable scope of the disclosure is defined by the appended claims.

## Claims

1. A gas turbine engine (10) comprising:
a turbine (20, 22) coupled to a modulated turbine cooling system (13) for channeling cooling air into said turbine, said modulated turbine cooling system comprising a modulation device;
a core compartment (15) coupled to a core compartment cooling system (12);
an integrated actuator (100) coupled to said modulated turbine cooling system (13) and to said core compartment cooling system (12), said integrated actuator comprising:
an actuator body (106);
an extension rod (116) coupled to said actuator body, said extension rod including a piston valve (108), wherein said extension rod is configured for selective movement between
a first position (101) in a first mode of operation (102) where said piston valve (108) is fully open, and
a second position (103) in a second mode of operation (104) where said piston valve is less than fully open;
a flow body (114) coupled to said actuator body, said flow body housing said piston valve; and wherein
said modulation device is coupled to said extension rod (116), said modulation device configured to be fully open in the first mode of operation and configured to be less than fully open in the second mode of operation.

2. The gas turbine engine (10) in accordance with Claim 1; wherein the modulation device is an actuated valve (40).

3. The gas turbine engine (10) in accordance with Claim 1 or 2; wherein when the piston valve (108) is fully open, cooling air is able to flow through said core compartment cooling system (12).

4. The gas turbine engine (10) in accordance with any preceding Claim; wherein during the first mode of operation (102), integrated actuator (100) is configured to fully open actuated valve (40) to allow for a greater mass flow of cooling air into turbine (20) than during the second mode of operation (104) when said integrated actuator at least partially closes actuated valve (40) to limit the amount of cooling air channeled to turbine (20) when cooling air from the modulated turbine cooling system (13) is not required.

5. The gas turbine engine (10) in accordance with any preceding Claim; wherein the turbine (20, 22) comprises a high pressure turbine (20) and a low pressure turbine (22), and wherein the modulated turbine cooling system (13) acts to channel cooling air into said high pressure turbine (20).

6. The gas turbine engine (10) in accordance with any preceding Claim; further comprising an airflow inlet (110) and an airflow outlet (112), wherein said airflow inlet and airflow outlet extend from said flow body perpendicular to said extension rod, and said airflow inlet and airflow outlet are spaced apart by a distance along said flow body.

7. The gas turbine engine (10) in accordance with Claim 6; further comprising a fan discharge inlet (30) and a duct (36) for allowing cooling air into airflow inlet (110).

8. The gas turbine engine in accordance with any preceding Claim further comprising a control unit (44) configured to control said integrated actuator according to a predetermined control schedule that defines said first mode of operation and said second mode of operation based on a power setting of the gas turbine engine (10).

9. The gas turbine engine in accordance with any preceding Claim, wherein said control unit (44) commands said extension rod to said first position in said first mode of operation and commands said extension rod to said second position in said second mode of operation.

10. The gas turbine engine in accordance with any preceding Claim, wherein said core compartment cooling system (12) and said modulated turbine cooling system (13) operate under a common schedule such that both said core compartment cooling system and said turbine cooling system are either in said first mode of operation or in said second mode of operation and such that said piston valve and said modulation device are in the corresponding said first or second position.

11. The gas turbine engine in accordance with any preceding Claim, wherein said piston valve is coupled to said core compartment cooling system and said modulation device is coupled to said modulated turbine cooling system, said piston valve and said modulation device being configured to operate a core compartment cooling system and a modulated turbine cooling system, respectively, in said first and second modes of operation.

12. The gas turbine engine in accordance with any preceding Claim, wherein a diameter of said piston valve is smaller than a diameter of said flow body (114) such that a circumferential gap (134) is formed between said piston valve and said flow body.

13. The gas turbine engine in accordance with any preceding Claim, wherein said extension rod is coupled to a mechanical link that controls a cable (120) to operate said modulation device.

## Patentansprüche

1. Gasturbinentriebwerk (10), umfassend:
eine Turbine (20, 22), die zum Leiten von Kühlluft in die Turbine an ein moduliertes Turbinenkühlsystem (13) gekoppelt ist, wobei das modulierte Kühlsystem eine Modulationsvorrichtung umfasst;
eine Kernkammer (15), die an ein Kernkammerkühlsystem (12) gekoppelt ist;
ein integriertes Stellglied (100), das an das modulierte Turbinenkühlsystem (13) und das Kernkammerkühlsystem (12) gekoppelt ist, wobei das integrierte Stellglied umfasst:
einen Stellgliedkörper (106);
eine Verlängerungsstange (116), die an den Stellgliedkörper gekoppelt ist, wobei die Verlängerungsstange ein Kolbenventil (108) aufweist, wobei die Verlängerungsstange konfiguriert ist, zur selektiven Bewegung zwischen
einer ersten Position (101) in einem ersten Betriebsmodus (102), in dem das Kolbenventil (108) vollständig geöffnet ist, und
einer zweiten Position (103) in einem zweiten Betriebsmodus (104), in dem das Kolbenventil weniger als vollständig geöffnet ist;
einen Strömungskörper (114), der an den Stellgliedkörper gekoppelt ist, wobei der Strömungskörper das Kolbenventil aufnimmt; und wobei
die Modulationsvorrichtung an die Verlängerungsstange (116) gekoppelt ist, wobei die Modulationsvorrichtung konfiguriert ist, um in dem ersten Betriebsmodus vollständig geöffnet zu sein, und konfiguriert ist, um in dem zweiten Betriebsmodus weniger als vollständig geöffnet zu sein.

2. Gasturbinentriebwerk (10) nach Anspruch 1; wobei die Modulationsvorrichtung ein betätigtes Ventil (40) ist.

3. Gasturbinentriebwerk (10) nach Anspruch 1 oder 2; wobei, wenn das Kolbenventil (108) vollständig geöffnet ist, Kühlluft durch das Kernkammerkühlsystem (12) strömen kann.

4. Gasturbinentriebwerk (10) nach einem vorstehenden Anspruch; wobei während des ersten Betriebsmodus (102) das integrierte Stellglied (100) konfiguriert ist, um das betätigte Ventil (40) vollständig zu öffnen, um eine größere Massenströmung von Kühlluft in die Turbine (20) zu ermöglichen als während des zweiten Betriebsmodus (104), wenn das integrierte Stellglied zumindest teilweise das betätigte Ventil (40) schließt, um die Menge an Kühlluft, die in die Turbine (20) geleitet wird, wenn Kühlluft von dem modulierten Turbinenkühlsystem (13) nicht benötigt wird, zu begrenzen.

5. Gasturbinentriebwerk (10) nach einem vorstehenden Anspruch; wobei die Turbine (20, 22) eine Hochdruckturbine (20) und eine Niederdruckturbine (22) umfasst und wobei das modulierte Turbinenkühlsystem (13) agiert, um Kühlluft in die Hochdruckturbine (20) zu leiten.

6. Gasturbinentriebwerk (10) nach einem vorstehenden Anspruch; weiter umfassend einen Luftströmungseinlass (110) und einen Luftströmungsauslass (112), wobei sich der Luftströmungseinlass und der Luftströmungsauslass von dem Strömungskörper senkrecht zu der Verlängerungsstange erstrecken und der Luftströmungseinlass und der Luftströmungsauslass durch einen Abstand entlang des Strömungskörpers voneinander beabstandet sind.

7. Gasturbinentriebwerk (10) nach Anspruch 6; weiter umfassend einen Gebläseaustrittseinlass (30) und einen Kanal (36), um das Einströmen von Kühlluft in den Luftströmungseinlass (110) zu ermöglichen.

8. Gasturbinentriebwerk nach einem vorstehenden Anspruch, weiter umfassend eine Steuereinheit (44), die konfiguriert ist, um das integrierte Stellglied gemäß einem vorbestimmten Steuerplan zu steuern, der den ersten Betriebsmodus und den zweiten Betriebsmodus basierend auf einer Leistungseinstellung des Gasturbinentriebwerks (10) definiert.

9. Gasturbinentriebwerk nach einem vorstehenden Anspruch, wobei die Steuereinheit (44) die Verlängerungsstange zu der ersten Position in dem ersten Betriebsmodus befiehlt und die Verlängerungsstange zu der zweiten Position in dem zweiten Betriebsmodus befiehlt.

10. Gasturbinentriebwerk nach einem vorstehenden Anspruch, wobei das Kernkammerkühlsystem (12) und das modulierte Turbinenkühlsystem (13) unter einem gemeinsamen Plan arbeiten, sodass sich beide, das Kernkammerkühlsystem und das modulierte Turbinenkühlsystem, entweder in dem ersten Betriebsmodus oder in dem zweiten Betriebsmodus befinden, und sodass sich das Kolbenventil und die Modulationsvorrichtung in der entsprechenden ersten oder zweiten Position befinden.

11. Gasturbinentriebwerk nach einem vorstehenden Anspruch, wobei das Kolbenventil an das Kernkammerkühlsystem gekoppelt ist und die Modulationsvorrichtung an das modulierte Turbinenkühlsystem gekoppelt ist, wobei das Kolbenventil und die Modulationsvorrichtung konfiguriert sind, um ein Kernkammerkühlsystem bzw. ein moduliertes Turbinenkühlsystem in dem ersten und dem zweiten Betriebsmodus zu betreiben.

12. Gasturbinentriebwerk nach einem vorstehenden Anspruch, wobei ein Durchmesser des Kolbenventils kleiner als ein Durchmesser des Strömungskörpers (114) ist, sodass ein umlaufender Spalt (134) zwischen dem Kolbenventil und dem Strömungskörper gebildet wird.

13. Gasturbinentriebwerk nach einem vorstehenden Anspruch, wobei die Verlängerungsstange an eine mechanische Verbindung gekoppelt ist, die ein Kabel (120) steuert, um die Modulationsvorrichtung zu betreiben.

## Revendications

1. Moteur à turbine à gaz (10) comprenant :
une turbine (20, 22) accouplée à un système de refroidissement de turbine modulé (13) pour canaliser de l'air de refroidissement dans ladite turbine, ledit système de refroidissement de turbine modulé comprenant un dispositif de modulation ;
un compartiment central (15) accouplé à un système de refroidissement de compartiment central (12) ;
un actionneur intégré (100) accouplé audit système de refroidissement de turbine modulé (13) et audit système de refroidissement de compartiment central (12), ledit actionneur intégré comprenant :
un corps d'actionneur (106) ;
une tige d'extension (116) accouplée audit corps d'actionneur, ladite tige d'extension incluant un clapet à piston (108), dans lequel ladite tige d'extension est configurée pour un déplacement sélectif entre
une première position (101) dans un premier mode de fonctionnement (102) où ledit clapet à piston (108) est totalement ouvert, et
une seconde position (103) dans un second mode de fonctionnement (104) où ledit clapet à piston est moins que totalement ouvert ;
un corps d'écoulement (114) accouplé audit corps d'actionneur, ledit corps d'écoulement logeant ledit clapet à piston ; et dans lequel
ledit dispositif de modulation est accouplé à ladite tige d'extension (116), ledit dispositif de modulation étant configuré pour être totalement ouvert dans le premier mode de fonctionnement et configuré pour être moins que totalement ouvert dans le second mode de fonctionnement.

2. Moteur à turbine à gaz (10) selon la revendication 1 ; dans lequel le dispositif de modulation est un clapet actionné (40).

3. Moteur à turbine à gaz (10) selon la revendication 1 ou 2 ; dans lequel, lorsque le clapet à piston (108) est totalement ouvert, de l'air de refroidissement peut s'écouler à travers ledit système de refroidissement de compartiment central (12).

4. Moteur à turbine à gaz (10) selon l'une quelconque des revendications précédentes ; dans lequel, durant le premier mode de fonctionnement (102), l'actionneur intégré (100) est configuré pour ouvrir totalement le clapet actionné (40) pour permettre un débit massique d'air de refroidissement dans la turbine (20) plus élevé que durant le second mode de fonctionnement (104) quand ledit actionneur intégré ferme au moins partiellement le clapet actionné (40) afin de limiter la quantité d'air de refroidissement canalisé jusqu'à la turbine (20) quand de l'air de refroidissement provenant du système de refroidissement de turbine modulé (13) n'est pas nécessaire.

5. Moteur à turbine à gaz (10) selon l'une quelconque des revendications précédentes ; dans lequel la turbine (20, 22) comprend une turbine haute pression (20) et une turbine basse pression (22), et dans lequel le système de refroidissement de turbine modulé (13) agit pour canaliser de l'air de refroidissement dans ladite turbine haute pression (20).

6. Moteur à turbine à gaz (10) selon l'une quelconque des revendications précédentes ; comprenant en outre une entrée d'écoulement d'air (110) et une sortie d'écoulement d'air (112), dans lequel lesdites entrée d'écoulement d'air et sortie d'écoulement d'air s'étendent depuis ledit corps d'écoulement perpendiculairement à ladite tige d'extension, et lesdites entrée d'écoulement d'air et sortie d'écoulement d'air sont espacées d'une distance le long dudit corps d'écoulement.

7. Moteur à turbine à gaz (10) selon la revendication 6 ; comprenant en outre une entrée d'évacuation de ventilateur (30) et un conduit (36) pour accepter de l'air de refroidissement dans l'entrée d'écoulement d'air (110).

8. Moteur à turbine à gaz selon l'une quelconque des revendications précédentes comprenant en outre une unité de commande (44) configurée pour commander ledit actionneur intégré en fonction d'un programme de commande prédéterminé qui définit ledit premier mode de fonctionnement et ledit second mode de fonctionnement sur la base d'un réglage d'alimentation du moteur à turbine à gaz (10).

9. Moteur à turbine à gaz selon l'une quelconque des revendications précédentes, dans lequel ladite unité de commande (44) commande ladite tige d'extension vers ladite première position dans ledit premier mode de fonctionnement et commande ladite tige d'extension vers ladite seconde position dans ledit second mode de fonctionnement.

10. Moteur à turbine à gaz selon l'une quelconque des revendications précédentes, dans lequel ledit système de refroidissement de compartiment central (12) et ledit système de refroidissement de turbine modulé (13) fonctionnent sous un programme commun de telle sorte que ledit système de refroidissement de compartiment central et ledit système de refroidissement de turbine sont tous les deux soit dans ledit premier mode de fonctionnement soit dans ledit second mode de fonctionnement et de telle sorte que ledit clapet à piston et ledit dispositif de modulation sont dans ladite première ou seconde position correspondante.

11. Moteur à turbine à gaz selon l'une quelconque des revendications précédentes, dans lequel ledit clapet à piston est accouplé audit système de refroidissement de compartiment central et ledit dispositif de modulation est accouplé audit système de refroidissement de turbine modulé, ledit clapet à piston et ledit dispositif de modulation étant configurés pour faire fonctionner un système de refroidissement de compartiment central et un système de refroidissement de turbine modulé, respectivement, dans lesdits premier et second modes de fonctionnement.

12. Moteur à turbine à gaz selon l'une quelconque des revendications précédentes, dans lequel un diamètre dudit clapet à piston est plus petit qu'un diamètre dudit corps d'écoulement (114) de telle sorte qu'un espace circonférentiel (134) est formé entre ledit clapet à piston et ledit corps d'écoulement.

13. Moteur à turbine à gaz selon l'une quelconque des revendications précédentes, dans lequel ladite tige d'extension est accouplée à une liaison mécanique qui commande un câble (120) pour faire fonctionner ledit dispositif de modulation.
